# EUROPÄISCHE PATENTANMELDUNG

(11) **EP 1 867 468 A1**
(43) Veröffentlichungstag der Anmeldung: **19.12.2007**
(21) Anmeldenummer: 06012075.5
(22) Anmeldetag: 12.06.2006
(51) Int. Cl.: B30B 1/26, B30B 15/00, F16C 3/28

(54) **Hubverstelleinrichtung sowie Presse, Stanz- oder Umformautomat mit einer Hubverstelleinrichtung**

(71) Anmelder: Haulick + Roos GmbH, 75175 Pforzheim (DE)
(72) Erfinder: Siegel, Andreas, 75417 Mühlacker (DE)
(74) Vertreter: Hoeger, Stellrecht & Partner Patentanwälte

(57) **Zusammenfassung**

Die Erfindung betrifft eine Hubverstelleinrichtung für eine Presse oder einen Stanz- oder Umformautomaten, mit einer drehbar gelagerten Exzenterwelle (18), die mindestens einen Exzenterzapfen (54) aufweist, an dem eine Exzenterbuchse (55) angeordnet ist, wobei an der Exzenterbuchse (55) ein Pleuel (22; 23) drehbar gelagert ist und der Exzenterbuchse (55) benachbart ein Mitnahmering (58) an der Exzenterwelle (18) drehfest gehalten ist, und mit ersten und zweiten Kupplungselementen (71, 74) sowie ersten und zweiten Arretierungselementen (77, 76), wobei die Exzenterbuchse (55) mittels der Kupplungselemente (71, 74) drehfest mit dem Mitnahmering (58) verbindbar und mittels der Arretierungselemente (77, 76) in einer bestimmten Winkelstellung arretierbar ist. Um die Hubverstelleinrichtung derart weiterzubilden, dass das Spiel zwischen den Bauteilen auf konstruktiv einfache Weise reduziert werden kann, wird erfindungsgemäß vorgeschlagen, dass der Mitnahmering (58) an der Exzenterwelle (18) axial verschiebbar gehalten ist, wobei in einer eingekuppelten Stellung des Mitnahmeringes (58) die Kupplungselemente (71, 74) ineinander eingreifen und die Arretierungselemente (77, 76) im Abstand zueinander angeordnet sind und wobei in einer entkuppelten Stellung des Mitnahmeringes (58) die Kupplungselemente (71, 74) zueinander beabstandet sind und die Arretierungselemente (77, 76) ineinander eingreifen.

## Beschreibung

Die Erfindung betrifft eine Hubverstelleinrichtung für eine Presse oder einen Stanz- oder Umformautomaten, mit einer drehbar gelagerten Exzenterwelle, die mindestens einen Exzenterzapfen aufweist, an dem eine Exzenterbuchse angeordnet ist, wobei an der Exzenterbuchse ein Pleuel drehbar gelagert ist und der Exzenterbuchse benachbart ein Mitnahmering an der Exzenterwelle drehfest gehalten ist, und mit ersten und zweiten Kupplungselementen sowie ersten und zweiten Arretierungselementen, wobei die Exzenterbuchse mittels der Kupplungselemente drehfest mit dem Mitnahmering verbindbar und mittels der Arretierungselemente in einer bestimmten Winkelstellung arretierbar ist.

Außerdem betrifft die Erfindung eine Presse, einen Stanz- oder einen Umformautomaten mit einem Gestell, an dem eine Aufspannplatte zur Montage eines Unterwerkzeuges gehalten ist, und mit einem relativ zur Aufspannplatte hin- und herbewegbaren Stößel zur Montage eines Oberwerkzeuges, und mit mindestens einer Hubverstelleinrichtung der voranstehend genannten Art, wobei der Stößel über eine Schubeinrichtung mit dem Pleuel der Hubverstelleinrichtung gekoppelt ist.

Pressen, Stanz- oder Umformautomaten der eingangs genannten Art weisen eine Aufspannplatte und einen relativ zu dieser hin- und herbewegbaren Stößel auf. Zum Antrieb des Stößels kommt eine Exzenterwelle zum Einsatz, die von einem Antriebsmotor in Drehung versetzt werden kann und einen Exzenterzapfen aufweist, an dem eine Exezenterbuchse drehbar gelagert ist. Die Exzenterbuchse nimmt ein Pleuel auf, das über eine Schubeinrichtung, beispielsweise eine Schubstange, mit dem Stößel gekoppelt ist. Der Hub des Stößels, das heißt der Abstand zwischen dessen oberen und unteren Totpunkt, kann verändert werden, indem die Exzenterbuchse relativ zum Exzenterzapfen verdreht wird. Im Normalbetrieb, das heißt während der Bearbeitung eines Werkstückes, ist die Exzenterbuchse drehfest mit dem Exzenterzapfen verbunden, wohingegen das Pleuel drehbar an der Exzenterbuchse gelagert ist. Soll der Hub des Stößels verändert werden, so wird hierzu die drehfeste Verbindung zwischen der Exzenterbuchse und dem Exzenterzapfen aufgehoben und die Exzenterbuchse stattdessen in einer bestimmten Winkelstellung arretiert. Die Exzenterwelle und damit auch der Exzenterzapfen können anschließend langsam verdreht werden, so dass sich die Winkelstellung der Exzenterbuchse relativ zum Exzenterzapfen verändert. Nach Erreichen einer bestimmten Winkelstellung, die einem bestimmten Hub des Stößels entspricht, kann die Exzenterbuchse wieder drehfest mit dem Exzenterzapfen verbunden werden.

Zur Hubverstellung wird in der Patentschrift DE 31 12 382 C2 vorgeschlagen, neben der Exzenterbuchse einen Mitnahmering drehfest an der Exzenterwelle zu montieren und mittels einer Schiebehülse wahlweise eine drehfeste Verbindung zwischen der Exzenterbuchse und dem Mitnahmering oder aber eine drehfeste Verbindung zwischen der Exzenterbuchse und einem ortsfest gehaltenen Verriegelungsteil herzustellen. Die Schiebehülse weist hierzu zwei Innenverzahnungen auf, die mit Außenverzahnungen der Exzenterbuchse und des Mitnahmeringes kämmen, wenn die Exzenterbuchse drehfest mit dem Mitnahmering verbunden werden soll. Durch Verschieben der Schiebehülse kann deren Innenverzahnung mit der Außenverzahnung des Mitnahmeringes außer Eingriff gelangen, wobei gleichzeitig eine formflüssige Verbindung zwischen der Schiebehülse und dem Verriegelungsteil hergestellt wird. Die Sicherstellung einer drehfesten Verbindung zwischen der Exzenterbuchse und dem Mitnahmering über die Schiebehülse erfolgt durch den Einsatz mehrerer Verzahnungen, die wahlweise miteinander in Eingriff gebracht werden müssen. Dies erfordert ein nicht unbeträchtliches Spiel zwischen den Bauteilen, wodurch die Genauigkeit der Hubverstellung beeinträchtigt wird.

In der Patentschrift DE 196 12 954 C1 wird vorgeschlagen, die Exzenterbuchse verschiebbar am Exzenterzapfen zu lagern, so dass sie wahlweise mit einem seitlich neben der Exzenterbuchse drehfest an der Exzenterwelle gehaltenen Mitnahmering oder mit dem Pleuel formschlüssig in Eingriff gelangen kann. Das Verschieben der Exzenterbuchse erfordert allerdings einen erheblichen konstruktiven Aufwand.

Aus der Patentschrift DE 44 12 198 C1 ist eine Hubverstelleinrichtung der eingangs genannten Art bekannt, bei der eine Schiebehülse zum Einsatz kommt, die in axialer Richtung bezogen auf die Exzenterwelle verschoben werden kann und eine Innenverzahnung aufweist, die in einer eingekuppelten Stellung abschnittsweise sowohl mit einer Außenverzahnung eines drehfest an der Exzenterwelle gehaltenen Mitnahmeringes als auch mit einer Außenverzahnung der Exzenterbuchse kämmt. Die beiden Außenverzahnungen bilden erste Kupplungselemente aus, die in der eingekuppelten Stellung formschlüssig in zweite Kupplungselemente in Form der Innenverzahnung der Schiebehülse eingreifen. Wird die Schiebehülse in eine entkuppelte Stellung in Richtung auf die Exzenterbuchse verschoben, so taucht ein an der Schiebehülse angeordneter Vorsprung in eine korrespondierende Vertiefung des Pleuels. Der Vorsprung bildet ein erstes Arretierungselement aus, das mit dem zweiten Arretierungselement in Form der Vertiefung des Pleuels in Eingriff gebracht werden kann, um die Exzenterbuchse in einer bestimmten Winkelstellung zu arretieren. Bei einer derartigen Ausgestaltung der Hubverstelleinrichtung kommen drei Verzahnungen zum Einsatz, die miteinander in Eingriff gebracht werden müssen und ein gewisses Spiel zwischen den Bauteilen erfordern.

Aufgabe der vorliegenden Erfindung ist es, eine Hubverstelleinrichtung der eingangs genannten Art sowie eine Presse oder einen Stanz- oder Umformautomaten mit einer solchen Hubverstelleinrichtung derart weiterzubilden, dass das Spiel zwischen den Bauteilen auf konstruktiv einfache Weise reduziert werden kann.

Diese Aufgabe wird bei einer Hubverstelleinrichtung der gattungsgemäßen Art erfindungsgemäß dadurch gelöst, dass der Mitnahmering an der Exzenterwelle zwischen einer eingekuppelten und einer entkuppelten Stellung axial verschiebbar gehalten ist, wobei in der eingekuppelten Stellung des Mitnahmeringes die Kupplungselemente ineinandergreifen und die Arretierungselemente im Abstand zueinander angeordnet sind und wobei in der entkuppelten Stellung des Mitnahmeringes die Kupplungselemente zueinander beabstandet sind und die Arretierungselemente ineinandergreifen.

Bei der erfindungsgemäßen Konstruktion ist der drehfest mit der Exzenterwelle verbundene Mitnahmering in axialer Richtung verschiebbar an der Exzenterwelle gehalten. Hierzu kann beispielsweise eine Passfeder zum Einsatz kommen. In einer eingekuppelten Stellung des Mitnahmeringes greifen die Kupplungselemente ineinander, so dass die Exzenterbuchse drehfest mit dem Mitnahmering verbunden ist und damit auch eine drehfeste Verbindung zwischen der Exzenterbuchse und dem Exzenterzapfen sichergestellt ist. Soll eine Hubverstellung vorgenommen werden, so wird hierzu der Mitnahmering in axialer Richtung in eine entkuppelte Stellung verschoben. Dies hat zur Folge, dass die Kupplungselemente zueinander in Abstand gelangen und gleichzeitig die Arretierungselemente ineinandergreifen, so dass die Exzenterbuchse in einer bestimmten Winkelstellung arretierbar ist und der Exzenterzapfen relativ zur Exzenterbuchse verdreht werden kann, um die Relativstellung zwischen Buchse und Zapfen entsprechend einem gewünschten Hub zu verstellen.

Es hat sich gezeigt, dass durch die verschiebliche Lagerung des Mitnahmeringes die Anzahl ineinander eingreifender Bauteile reduziert werden kann. Dies hat eine Verringerung des Spieles zwischen den Bauteilen zur Folge, so dass die Genauigkeit der Hubeinstellung verbessert werden kann. Die verschiebliche Lagerung des Mitnahmeringes an der Exzenterwelle bei gleichzeitiger Sicherstellung einer drehfesten Verbindung zwischen dem Mitnahmering und der Exzenterwelle lässt sich auf konstruktiv einfache Weise erzielen.

Ein weiterer Vorteil der erfindungsgemäßen Konstruktion liegt darin, dass die Hubverstellung nur einen geringen Bauraum zwischen den Lagern der Exzenterwelle erfordert. Der Lagerabstand kann somit reduziert werden, und dies wiederum ermöglicht es, die gesamte Steifigkeit des Triebwerkes der Presse oder des Stanz- oder Umformautomaten und die Steifigkeit der gesamten Maschine zu erhöhen. Eine derartige Erhöhung wiederum ermöglicht eine präzisere Bearbeitung der Werkstücke.

Die erfindungsgemäße Ausgestaltung der Hubverstelleinrichtung hat darüber hinaus den Vorteil, dass ein Ausgleichsgewicht auf einfache Weise an der Exzenterbuchse montiert werden kann. Der Einsatz eines Ausgleichgewichtes ermöglicht eine Kompensation der rotierenden Massen, und zwar unabhängig von der eingestellten Hubhöhe. Durch die Kompensation der rotierenden Massen können Schwingungen der Presse oder des Stanz- oder Umformautomaten reduziert werden.

Von Vorteil ist es, wenn die ersten Kupplungselemente als Innenverzahnung und die zweiten Kupplungselemente als Außenverzahnung ausgestaltet sind. Hierbei ermöglicht es die verschiebliche Lagerung des Mitnahmeringes, lediglich eine einzige Außenverzahnung und eine einzige Innenverzahnung vorzusehen. Verglichen mit einer Konstruktion, wie sie aus der Patentschrift DE 44 12 198 C1 bekannt ist, kann dadurch die Anzahl der Verzahnungen und damit auch das erforderliche Spiel zwischen den Verzahnungen reduziert werden.

Günstig ist es, wenn die Innenverzahnung an der Exzenterbuchse und die Außenverzahnung am Mitnahmering angeordnet ist. Durch Verschieben des Mitnahmeringes gelangen die Verzahnungen wahlweise miteinander in Eingriff oder in Abstand zueinander. Hierbei kann vorgesehen sein, dass an der Innenverzahnung und an der Außenverzahnung Schaltfasen angeordnet sind, so dass die Verzahnungen auf einfache Weise miteinander in Eingriff gebracht werden können.

Die Innenverzahnung der Exzenterbuchse ist bei einer vorteilhaften Ausführungsform an einem axial in Richtung auf den Mitnahmering vorstehenden Kragen der Exzenterbuchse angeordnet. Der Kragen bildet ein Hohlrad aus, in das ein Randabschnitt des Mitnahmeringes eintauchen kann.

Von besonderem Vorteil ist es, wenn am Kragen ein Ausgleichsgewicht gehalten ist. Wie bereits erläutert, ermöglicht ein Ausgleichsgewicht eine Kompensation der rotierenden Massen. Durch die Anordnung des Ausgleichsgewichts am Kragen der Exzenterbuchse ergibt sich eine besonders kompakte Bauform.

Der Mitnahmering kann in seinem der Exzenterbuchse zugewandten Randbereich eine Außenverzahnung tragen zur Herstellung einer drehfesten Verbindung zwischen dem Mitnahmering und der Exzenterbuchse.

Günstig ist es, wenn die Innenverzahnung der Exzenterbuchse in einem äußeren, dem Mitnahmering zugewandten Abschnitt des Kragens angeordnet ist, wobei sich an die Innenverzahnung dem Mitnahmering abgewandt ein verzahnungsfreier Innenbereich des Kragens anschließt. Durch Verschieben des Mitnahmeringes kann dessen Außenverzahnung wahlweise in Höhe der Innenverzahnung des Kragens oder in Höhe von dessen verzahnungsfreiem Innenbereich positioniert werden. Nimmt die Außenverzahnung eine Position im verzahnungsfreien Innenbereich des Kragens ein, so hat der Mitnahmering seine entkuppelte Stellung eingenommen, in der er relativ zur Exzenterbuchse verdreht werden kann. Durch Verschieben des Mitnahmeringes kann dieser eine eingekuppelte Stellung einnehmen, in der dessen Außenverzahnung mit der Innenverzahnung des Kragens kämmt, so dass über die beiden Verzahnungen eine drehfeste Verbindung zwischen dem Mitnahmering und der Exzenterbuchse sichergestellt werden kann.

Bei einer besonders bevorzugten Ausgestaltung der erfindungsgemäßen Hubverstelleinrichtung ist am Mitnahmering ein Schiebeteil drehbar gelagert, das zusammen mit dem Mitnahmering verschiebbar ist und das ein erstes Arretierungselement trägt, das mit einem an der Exenterbuchse angeordneten zweiten Arretierungselement zusammenwirkt. Mit Hilfe des Schiebeteiles kann der Mitnahmering in axialer Richtung zwischen seiner eingekuppelten Stellung und seiner entkuppelten Stellung hin und her verschoben werden. Das Schiebeteil ist drehbar am Mitnahmering gehalten, dies ermöglicht es, das Schiebeteil drehfest an der Maschine zu lagern, ohne dass dadurch die Drehbewegung des Mitnahmeringes beeinträchtigt wird. Über das Schiebeteil kann eine Schiebekraft auf den Mitnahmering ausgeübt werden. Das Schiebeteil ermöglicht nicht nur eine Verschiebung des Mitnahmeringes sondern auch eine ortsfeste Arretierung der Exzenterbuchse in einer gewünschten Winkelstellung. Hierzu weist das Schiebeteil ein erstes Arretierungselement auf, das mit einem an der Exzenterbuchse angeordneten zweiten Arretierungselement zusammenwirkt. Durch Verschieben des Schiebeteiles kann der Mitnahmering aus seiner eingekuppelten Stellung in seine entkuppelte Stellung überführt und gleichzeitig kann beispielsweise eine formflüssige Verbindung zwischen den beiden Arretierungselementen hergestellt werden. Die drehfeste Verbindung zwischen dem Mitnahmering und der Exzenterbuchse wird dadurch gelöst und gleichzeitig wird die Exzenterbuchse in einer vorgegebenen Winkelstellung am Schiebeteil arretiert.

Das am Schiebeteil angeordnete erste Arretierungselement kann beispielsweise als Arretiernut ausgestaltet sein und das an der Exzenterbuchse angeordnete zweite Arretierungselement kann als Arretierbolzen ausgebildet sein. Denkbar ist jedoch auch eine umgekehrte Anordnung dergestalt, dass der Arretierbolzen am Schiebeteil und die Arretiernut an der Exzenterbuchse angeordnet ist. Die Positionierung des Arretierbolzens an der Exzenterbuchse hat jedoch den Vorteil, dass die rotierenden Massen des Triebwerkes der Presse bzw. des Stanz- oder Umformautomaten vermindert werden können.

Arretierbolzen und/oder Arretiernut können konisch ausgebildet sein. Dadurch wird das Einführen des Arretierbolzens in die Arretiernut vereinfacht. Dies wiederum erhöht die Funktionssicherheit der Hubverstelleinrichtung. Die konische Form von Arretierbolzen und Arretiernut ermöglicht mit zunehmendem axialem Schaltweg ein zunehmendes Spiel in radialer Richtung, wodurch wiederum die ersten und zweiten Kupplungselemente einfacher ineinander eingeführt werden können.

Wie bereits erläutert, ist der Mitnahmering bei der erfindungsgemäßen Konstruktion verschiebbar an der Exzenterwelle gelagert. Zum Antrieb des Mitnahmeringes kommt bei einer vorteilhaften Ausführungsform ein Schiebeaggregat zum Einsatz, das ortsfest an einem Gestell der Presse bzw. des Stanz- oder Umformautomaten gehalten ist. Im Gegensatz zu einer Konstruktion, wie sie beispielsweise aus der Patentschrift DE 196 12 954 C1 bekannt ist, müssen zum Verschieben des Mitnahmeringes keine Zuführungsleitungen für eine Hydraulikflüssigkeit durch die Exzenterwelle hindurchgeführt werden, um Ringräume zwischen dem Mitnahmering und der Exzenterwelle zu beaufschlagen, vielmehr kann der Mitnahmering auf konstruktiv einfache Weise dadurch verschoben werden, dass von einem ortsfest am Gestell gehaltenen Schiebeaggregat eine Schiebekraft ausgeübt wird.

Hierbei ist es günstig, wenn das Schiebeaggregat zumindest ein Kolben-Zylinderaggregat umfasst. Vorzugsweise kommen zwei Kolben-Zylinderaggregate zum Einsatz, denn dadurch kann ein Verkanten des Mitnahmeringes auf konstruktiv einfache Weise vermieden werden.

Statt eines oder mehrerer Kolben-Zylinderaggregate kann das Schiebeaggregat auch mindestens einen elektrischen Stellmotor aufweisen.

Bei einer bevorzugten Ausführungsform wirkt das Schiebeaggregat mit einem am Mitnahmering drehbar, jedoch axial unverschieblich gehaltenen Schiebeteil zusammen. Das Schiebeteil kann beispielsweise an zwei Stellbolzen festgelegt sein, die jeweils mit einem Stellantrieb des Schiebeaggregates zusammenwirken und parallel zur Längsachse der Exzenterwelle hin und her bewegt werden können. Die Bewegung der Stellbolzen kann über das Schiebeteil auf den Mitnahmering übertragen werden, um diesen zwischen seiner eingekuppelten Stellung und seiner entkuppelten Stellung hin und her zu bewegen. Das Schiebeteil kann beispielsweise platten- oder stabförmig ausgestaltet sein.

Die Erfindung betrifft nicht nur eine Hubverstelleinrichtung der voranstehend erläuterten Art sondern auch eine Presse oder einen Stanz- oder Umformautomaten mit mindestens einer derartigen Hubverstelleinrichtung. Die Maschine weist ein Gestell auf, an dem eine Aufspannplatte zur Montage eines Unterwerkzeuges gehalten ist, sowie einen relativ zur Aufspannplatte hin- und herbewegbaren Stößel zur Montage eines Oberwerkzeuges, wobei der Stößel über eine Schubeinrichtung mit dem Pleuel der Hubverstelleinrichtung gekoppelt ist. Wie bereits erläutert, kann durch den Einsatz der Hubverstelleinrichtung bei einer derartigen Presse oder einem Stanz- oder Umformautomaten das zur Hubverstellung unvermeidliche Spiel zwischen Bauteilen auf konstruktiv einfache Weise reduziert werden.

Zur Führung des Stößels am Gestell kommen vorzugsweise Führungssäulen zum Einsatz, die am Stößel festgelegt sind und in vertikaler Richtung verschiebbar in Führungslagern am Gestell gehalten sind. Vorzugsweise sind die Führungssäulen jeweils mittels einer ersten Gleit- oder Wälzführung oberhalb einer Bandlaufebene und mittels einer zweiten Gleit- oder Wälzführung unterhalb einer Bandlaufebene verschiebbar gelagert. Bei Einsatz von vier Führungssäulen ergibt sich somit eine achtfache Lagerung des Stößels am Gestell. Dies ermöglicht eine besonders präzise Bearbeitung der Werkstücke.

Die nachfolgende Beschreibung einer bevorzugten Ausführungsform der Erfindung dient im Zusammenhang mit der Zeichnung der näheren Erläuterung. Es zeigen:
- Figur 1:: eine schematische Darstellung eines Stanz- oder Umformautomaten mit zwei Hubverstelleinrichtungen;
- Figur 2:: eine Schnittansicht einer Hubverstelleinrichtung entsprechend Detail X aus Figur 1, wobei ein Mitnahmering eine eingekuppelte Stellung einnimmt;
- Figur 3:: eine Ansicht auf die Hubverstelleinrichtung in Richtung von Pfeil A aus Figur 2;
- Figur 4:: eine Schnittansicht der Hubverstelleinrichtung entsprechend Figur 2, wobei der Mitnahmering eine entkuppelte Stellung einnimmt und
- Figur 5:: eine vergrößerte Darstellung von Detail Y aus Figur 4.

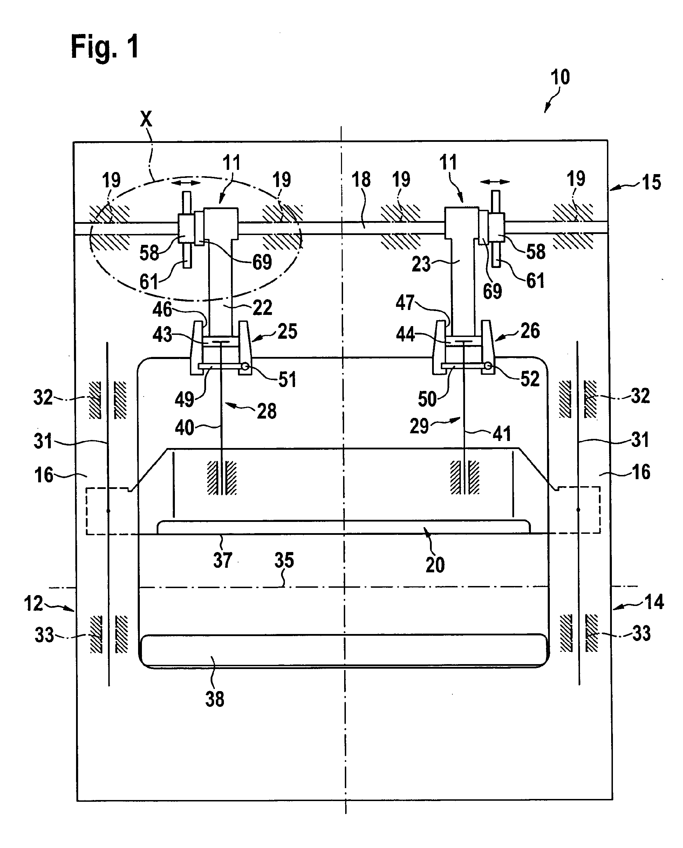

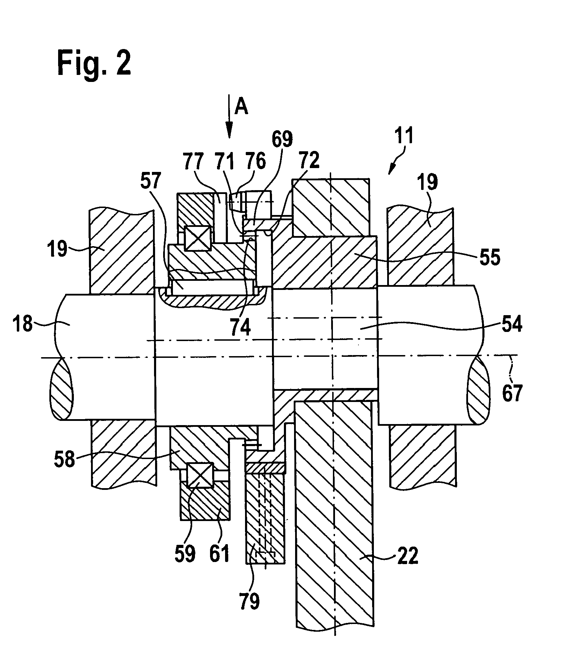

In Figur 1 ist schematisch ein erfindungsgemäßer Stanz- oder Umformautomat 10 dargestellt mit zwei identisch ausgestalteten Hubverstelleinrichtungen 11. Eine Hubverstelleinrichtung 11 ist in den Figuren 2 bis 5 im Detail dargestellt.

Der Stanz- oder Umformautomat 10 weist ein rahmenartiges Gestell 12 auf mit einem Gestellunterteil 14 und einem Gestelloberteil 15. Das Gestelloberteil 15 ist mittels vier in einer Horizontalebene an den Eckpunkten eines Rechtecks angeordneter Ständer 16 am Gestellunterteil 14 abgestützt.

Am Gestelloberteil 15 ist mittels mehrerer Wälz- oder Gleitlager 19 eine Exzenterwelle 18 drehbar gelagert, die von einem an sich bekannten und deshalb in der Zeichnung nicht dargestellten Antriebsmotor drehend antreibbar ist. Die Exzenterwelle 18 dient dem Antrieb eines Stößels 20, der über zwei identisch ausgestaltete Pleuel 22, 23 und an diese angelenkte, jeweils in einem Führungsteil 25 bzw. 26 in vertikaler Richtung am Gestell 12 geführte Schubeinrichtungen 28, 29 mit der Exzenterwelle 18 gekoppelt ist.

Am Stößel 20 sind jeweils einem Ständer 16 benachbart insgesamt vier Führungssäulen 31 festgelegt, die mittels einer ersten Wälzführung 32 am Gestelloberteil 15 und mittels einer zweiten Wälzführung 33 am Gestellunterteil 14 in vertikaler Richtung verschiebbar gelagert sind. Die ersten Wälzführungen 32 sind oberhalb einer Bandlaufebene 35 und die zweiten Wälzführungen 33 sind unterhalb der Bandlaufebene 35 positioniert. Die Bandlaufebene 35 bildet die Ebene aus, innerhalb derer zu bearbeitende Werkstücke beim Betrieb des Stanzautomaten 10 positioniert werden.

Der Stößel 20 weist eine Stirnseite 37 auf, die einer Aufspannplatte 38 des Gestellunterteils 14 zugewandt ist. An der Stirnseite 37 können Oberwerkzeuge und an der Aufspannplatte 38 können den Oberwerkzeugen zugeordnete Unterwerkzeuge montiert werden zur Bearbeitung der Werkstücke in der Bandlaufebene 35.

Die Schubeinrichtungen 28, 29 umfassen jeweils eine Schubstange 40 bzw. 41, die frei drehbar an einem Kolben 43 bzw. 44 gelagert ist und mit ihrem dem Kolben 43 bzw. 44 abgewandten Ende in den Stößel 20 eingeschraubt ist. Der Kolben 43 bzw. 44 ist in einem Führungszylinder 46 bzw. 47 des Führungsteiles 25 bzw. 26 verschiebbar gelagert, und an den Kolben 43 bzw. 44 ist ein Pleuel 22 bzw. 23 angelenkt.

Im Führungsteil 25 bzw. 26 ist ein Schneckenrad 49 bzw. 50 drehbar gehalten, das mit einer Schnecke 51 bzw. 52 kämmt. Die Schneckenräder 49 bzw. 50 sind drehfest an der jeweiligen Schubstange 40 bzw. 41 festgelegt und können von der jeweiligen Schnecke 51 bzw. 52 in Drehung versetzt werden. Dies ermöglicht es, die Schubstangen 40, 41 um ihre Längsachse zu verdrehen, und dies wiederum hat eine lineare Verschiebung des Stößels 20 zur Folge. Durch Verdrehen der Schubstangen 40, 41 kann somit die effektive Länge der Schubeinrichtungen 28, 29 verändert werden, um auf diese Weise die Lage des unteren Totpunktes des Stößels 20 zu justieren.

Zur Erzeugung der Hin- und Herbewegung des Stößels 20 weist die Exzenterwelle 18 zwei Exzenterzapfen 54 auf, an denen jeweils eine Exzenterbuchse 55 gehalten ist. An der Exzenterbuchse 55 ist das Pleuel 22 bzw. 23 drehbar gelagert. Neben den Exzenterzapfen 54 ist an der Exzenterwelle 18 mittels Passfedern 57 jeweils ein Mitnahmering 58 drehfest, jedoch axial verschiebbar gehalten. Der Mitnahmering 58 nimmt über ein Lager 59 ein Schiebeteil in Form einer Schiebeplatte 61 auf, die starr mit zwei Stellbolzen 62 bzw. 63 verbunden ist. Die Stellbolzen 62, 63 können jeweils mittels eines Stellantriebes 64 bzw. 65 parallel zur Längsachse 67 der Exzenterwelle 18 verschoben werden. Die Stellantriebe 64, 65 können beispielsweise als hydraulisch beaufschlagbare Kolben-Zylinderaggregate ausgestaltet sein oder auch als elektrische Stellmotoren. Sie sind ortsfest am Gestelloberteil 15 des Stanzautomaten 10 festgelegt.

In Richtung auf den Mitnahmering 58 weist die Exzenterbuchse 55 einen vorstehenden Kragen 69 auf, der in seinem dem Mitnahmering 58 zugewandten Endabschnitt eine Innenverzahnung 71 trägt, an die sich, dem Mitnahmering 58 abgewandt, ein verzahnungsfreier Innenbereich 72 anschließt.

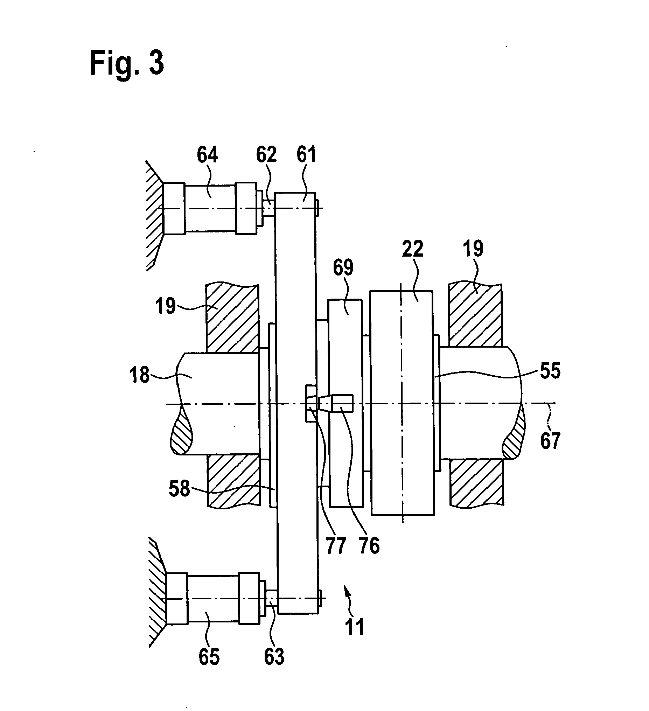

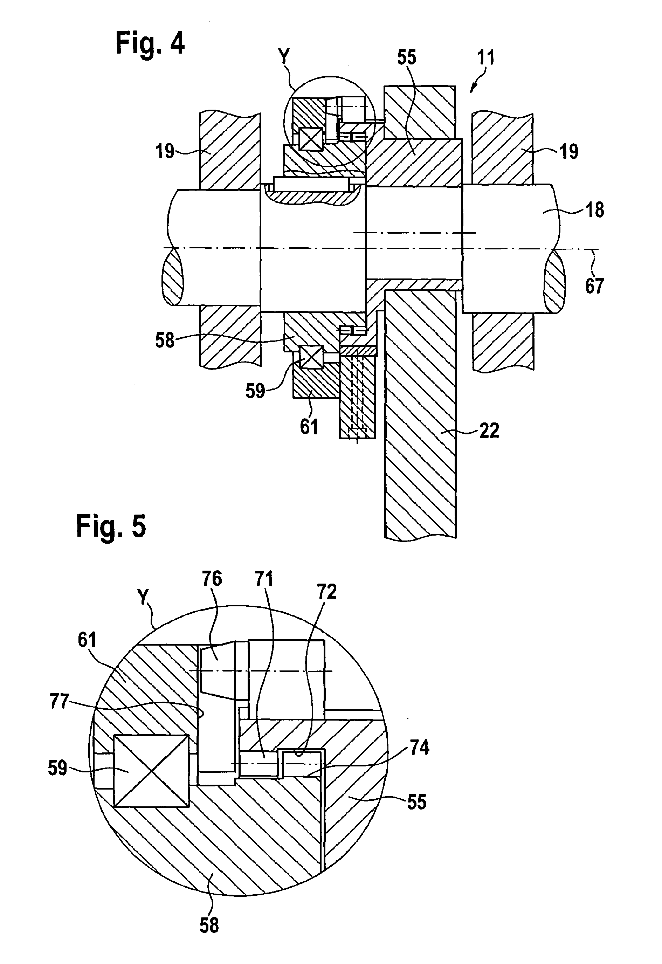

Der Mitnahmering 58 weist an seinem dem Kragen 69 zugewandten Randbereich eine Außenverzahnung 74 auf, die in der in den Figuren 2 und 3 dargestellten eingekuppelten Stellung des Mitnahmeringes 58 mit der Innenverzahnung 71 kämmt, so dass die Exzenterbuchse 55 über die Innenverzahnung 71 und die Außenverzahnung 74 drehfest mit dem Mitnahmering 58 verbunden ist, der seinerseits drehfest an der Exzenterwelle 18 gehalten ist. Mittels der Stellantriebe 64, 65 und der Stellbolzen 62, 63 kann der Mitnahmering 58 über die Schiebeplatte 61 ausgehend von seiner eingekuppelten Stellung so weit in Richtung auf die Exzenterbuchse 55 in eine entkuppelte Stellung verschoben werden, dass die Außenverzahnung 74 des Mitnahmeringes 58 eine Position innerhalb des verzahnungsfreien Innenbereichs 72 des Kragens 69 einnimmt. Die drehfeste Verbindung zwischen dem Mitnahmering 58 und der Exzenterbuchse 55 wird dadurch unterbrochen. Die entkuppelte Stellung des Mitnahmeringes 58 ist in den Figuren 4 und 5 dargestellt. Die Innenverzahnung 71 bildet ein erstes Kupplungselement aus und die Außenverzahnung 74 bildet ein zweites Kupplungselement aus, mit deren Hilfe die drehfeste Verbindung zwischen dem Mitnahmering 58 und der Exzenterbuchse 55 wahlweise hergestellt und unterbrochen werden kann.

Außenseitig trägt der Kragen 69 einen sich in Richtung auf sein freies Ende konisch verjüngenden Arretierbolzen 76, dem an der Schiebeplatte 61 eine Arretiernut 77 zugeordnet ist. Arretierbolzen 76 und Arretiernut 77 bilden erste und zweite Arretierungselemente aus, die in der entkuppelten Stellung des Mitnahmeringes 58 formschlüssig ineinandergreifen, um die Exzenterbuchse 55 in einer vorgegebenen Winkelstellung zu arretieren. Wird nämlich der Mitnahmering 58 in Richtung auf seine entkuppelte Stellung verschoben, so taucht in einer vorgegebenen Winkelstellung der Arretierbolzen 76 in die Arretiernut 77 ein, noch bevor die Innenverzahnung 71 des Kragens 69 die Außenverzahnung 74 des Mitnahmeringes 58 vollständig freigibt.

Am Kragen 69 ist außenseitig ein Ausgleichsgewicht 79 gehalten, das sich in Umfangsrichtung des Kragens 69 nur über einen Teilbereich erstreckt zum Ausgleich der rotierenden Massen des Stanzautomaten 10.

Zur Bearbeitung eines Werkstückes wird der Stößel 20 zu einer Hin- und Herbewegung angetrieben, indem die Exzenterwelle 18 in Drehung versetzt wird. Hierbei nimmt der Mitnahmering 58 seine in den Figuren 2 und 3 dargestellte eingekuppelte Stellung ein, so dass die Exzenterbuchse 55 über den Mitnahmering 58 drehfest mit der Exzenterwelle 18 verbunden ist.

Soll die Hubhöhe des Stößels 20 verändert werden, so wird die Exzenterwelle 18 in einer vorgegebenen Winkelstellung angehalten und anschließend wird der Mitnahmering 58 mittels der Stellantriebe 64 und 65 in seine entkuppelte Stellung verschoben, wie sie in den Figuren 4 und 5 dargestellt ist. Die drehfeste Verbindung zwischen der Exzenterbuchse 55 und der Exzenterwelle 18 über den Mitnahmering 58 wird dadurch unterbrochen, stattdessen wird die Exzenterbuchse 55 über den Arretierbolzen 76 und die Arretiernut 77 in einer vorgegebenen Winkelstellung arretiert. Nunmehr kann die Exzenterwelle 18 langsam um einen vorgegebenen Winkel verdreht werden, um die Ausrichtung des Exzenterzapfens 54 relativ zur Exzenterbuchse 55 und damit die Hubhöhe des Stößels 20 zu verändern. Anschließend kann der Mitnahmering 58 wieder in seine eingekuppelte Stellung verschoben werden. Hierbei gibt die Arretiernut 77 den Arretierbolzen 76 frei und gleichzeitig wird mittels der Innenverzahnung 71 und der Außenverzahnung 74 die drehfeste Verbindung zwischen der Exzenterbuchse 55 und dem Mitnahmering 58 wiederhergestellt. Mit geänderter Hubhöhe kann anschließend die Bearbeitung der Werkstücke wieder aufgenommen werden.

## Patentansprüche

1. Hubverstelleinrichtung für eine Presse oder einen Stanz- oder Umformautomaten, mit einer drehbar gelagerten Exzenterwelle (18), die mindestens einen Exzenterzapfen (54) aufweist, an dem eine Exzenterbuchse (55) angeordnet ist, wobei an der Exzenterbuchse (55) ein Pleuel (22; 23) drehbar gelagert ist und der Exzenterbuchse (55) benachbart ein Mitnahmering (58) an der Exzenterwelle (18) drehfest gehalten ist, und mit ersten und zweiten Kupplungselementen (71, 74) sowie ersten und zweiten Arretierungselementen (77, 76), wobei die Exzenterbuchse (55) mittels der Kupplungselemente (71, 74) drehfest mit dem Mitnahmering (58) verbindbar und mittels der Arretierungselemente (77, 76) in einer bestimmten Winkelstellung arretierbar ist, **dadurch gekennzeichnet, dass** der Mitnahmering (58) an der Exzenterwelle (18) zwischen einer eingekuppelten und einer entkuppelten Stellung axial verschiebbar gehalten ist, wobei in der eingekuppelten Stellung des Mitnahmeringes (58) die Kupplungselemente (71, 74) ineinandergreifen und die Arretierungselemente (77, 76) im Abstand zueinander angeordnet sind und wobei in der entkuppelten Stellung des Mitnahmeringes (58) die Kupplungselemente (71, 74) zueinander beabstandet sind und die Arretierungselemente (77, 76) ineinandergreifen.

2. Hubverstelleinrichtung nach Anspruch 1, **dadurch gekennzeichnet, dass** die ersten Kupplungselemente als Innenverzahnung (71) und die zweiten Kupplungselemente als Außenverzahnung (74) ausgestaltet sind.

3. Hubverstelleinrichtung nach Anspruch 2, **dadurch gekennzeichnet, dass** die Innenverzahnung (71) an der Exzenterbuchse (55) und die Außenverzahnung (74) am Mitnahmering (58) angeordnet ist.

4. Hubverstelleinrichtung nach Anspruch 3, **dadurch gekennzeichnet, dass** die Exzenterbuchse (55) einen axial in Richtung auf den Mitnahmering (58) vorstehenden Kragen (69) aufweist, der die Innenverzahnung (71) trägt.

5. Hubverstelleinrichtung nach Anspruch 4, **dadurch gekennzeichnet, dass** am Kragen (69) ein Ausgleichsgewicht (79) gehalten ist.

6. Hubverstelleinrichtung nach Anspruch 3, 4 oder 5, **dadurch gekennzeichnet, dass** der Mitnahmering (58) in seinem der Exzenterbuchse (55) zugewandten Randbereich die Außenverzahnung (74) trägt.

7. Hubverstelleinrichtung nach Anspruch 4, 5 oder 6, **dadurch gekennzeichnet, dass** die Innenverzahnung (71) in einem äußeren, dem Mitnahmering (58) zugewandten Abschnitt des Kragens (69) angeordnet ist, wobei sich an die Innenverzahnung (71) dem Mitnahmering (58) abgewandt ein verzahnungsfreier Innenbereich (72) des Kragens (69) anschließt.

8. Hubverstelleinrichtung nach einem der voranstehenden Ansprüche, **dadurch gekennzeichnet, dass** am Mitnahmering (58) ein Schiebeteil (61) drehbar gelagert ist, das zusammen mit dem Mitnahmering (58) verschiebbar ist und ein erstes Arretierungselement (77) trägt, das mit einem an der Exzenterbuchse (55) angeordneten zweiten Arretierungselement (76) zusammenwirkt.

9. Hubverstelleinrichtung nach Anspruch 8, **dadurch gekennzeichnet, dass** das erste Arretierungselement als Arretiernut (77) und das zweite Arretierungselement als Arretierbolzen (76) ausgestaltet ist.

10. Hubverstelleinrichtung nach einem der voranstehenden Ansprüche, **dadurch gekennzeichnet, dass** der Mitnahmering (58) mittels einer ortsfest an einem Gestell (12) der Presse bzw. des Stanz- oder Umformautomaten (10) gehaltenen Schiebeaggregates (62, 63, 64, 65) axial verschiebbar ist.

11. Hubverstelleinrichtung nach Anspruch 10, **dadurch gekennzeichnet, dass** das Schiebeaggregat (62, 63, 64, 65) zumindest ein Kolben-Zylinderaggregat umfasst.

12. Hubverstelleinrichtung nach Anspruch 10, **dadurch gekennzeichnet, dass** das Schiebeaggregat (62, 63, 64, 65) zumindest einen elektrischen Stellmotor umfasst.

13. Hubverstelleinrichtung nach Anspruch 10, 11 oder 12, **dadurch gekennzeichnet, dass** das Schiebeaggregat (62, 63, 64, 65) mit einem am Mitnahmering (58) drehbar, jedoch axial unverschieblich gehaltenen Schiebeteil (61) zusammenwirkt.

14. Presse, Stanz- oder Umformautomat mit einem Gestell (12), an dem eine Aufspannplatte (38) zur Montage eines Unterwerkzeuges gehalten ist, und mit einem relativ zur Aufspannplatte (38) hin- und herbewegbaren Stößel (20) zur Montage eines Oberwerkzeuges, und mit mindestens einer Hubverstelleinrichtung (11) nach einem der voranstehenden Ansprüche, wobei der Stößel (20) über eine Schubeinrichtung (28; 29) mit dem Pleuel (22; 23) der Hubverstelleinrichtung (11) gekoppelt ist.
